# DEMANDE DE BREVET EUROPEEN

(11) **EP 0 651 534 A1**
(43) Date de publication de la demande: **03.05.1995**
(21) Numéro de dépôt: 94402161.7
(22) Date de dépôt: 28.09.1994
(51) Int. Cl.: H04L 12/42, H04L 29/06, G06F 13/12, H04L 12/433

(54) **Dispositif numérique de connexion d'une pluralité de stations de travail sur un réseau local en anneau**

(30) Priorité: 29.09.1993 FR 9311622
(71) Demandeur: ALCATEL BUSINESS SYSTEMS, F-75008 Paris (FR)
(72) Inventeur: Vergnaud, Gerard, F-95130 Franconville (FR); Moulehiawy, Abdelkrim, F-75002 Paris (FR); Vuillemin, Gerard, F-75014 Paris (FR); Lemezec, Olivier, F-92120 Montrouge (FR)
(74) Mandataire: Schaub, Bernard

(57) **Abrégé**

Chaque station est reliée au réseau en anneau (5) au travers de blocs d'interface de station et d'anneau, le second de ces blocs est équipé d'un commutateur (37) de mise en communication de la station avec l'anneau (5) pour la transmission des signaux qu'il reçoit sous forme numérique, soit de cet anneau, soit de la station via le bloc d'interface de station associé. Le signal de données reçu d'une station au rythme d'un oscillateur de cette station est transcodé dans le bloc d'interface d'anneau associé avant d'être recodé sous sa forme d'origine au rythme fixé par un oscillateur (12) commun aux stations du dispositif qui est asservi à l'oscillateur d'une des stations prise comme maître.

## Description

La présente invention se rapporte à un dispositif numérique destiné à permettre la connexion d'une pluralité de stations de travail, telles que par exemple des micro-ordinateurs ou des terminaux, sur un réseau local en anneau, du genre "anneau à jeton".

Il est connu de connecter une pluralité de stations de travail, typiquement d'une centaine à plusieurs centaines de stations, sur un réseau local fonctionnellement circulaire, couramment appelé "anneau à jeton".

Les premières installations de ce type avaient une fréquence d'horloge de fonctionnement du réseau local ou anneau qui était de l'ordre de 4 Mégabits/seconde.

Actuellement, les exigences de la technique voudraient permettre à ce genre d'installation de fonctionner pour une fréquence d'horloge du réseau local qui soit pratiquement quatre fois plus élevée.

Les spécifications pour de telles installations sont les mêmes que pour les installations connues, et typiquement le code utilisé est un code de type "Manchester différentiel", c'est-à-dire un code pour lequel seuls les changements de niveau, ou transitions, sont pris en compte. Comme connu ce code est porteur du rythme et il est possible de le convertir en un autre code caractérisé par la longueur temporelle de ses symboles successifs, ces longueurs étant alors égales chacune à une ou plusieurs périodes de base, avec un maximum de quatre périodes de base.

Par exemple, il peut être défini un autre code comportant des symboles "longs", "moyens", et "courts", un symbole "long" ayant une longueur égale à trois périodes de base, un symbole "moyen" une longueur égale à deux périodes de base, et un symbole "court" une longueur égale à une seule période de base.

Pour des installations destinées à fonctionner à une fréquence d'horloge, ou vitesse d'anneau, nettement plus élevée telle qu'indiqué ci-dessus, il est en outre souhaité de respecter les mêmes distances de raccordement - typiquement de l'ordre d'une centaine de mètres - entre chaque station et l'anneau, que celles qui existent déjà sur les installations antérieures évoquées ci-dessus.

Les études effectuées par la Demanderesse ont permis de s'apercevoir que le respect, dans une installation de ce type qui fonctionnerait avec un débit d'anneau de l'ordre de 16 Mégabits/seconde, de cette distance de raccordement de l'ordre d'une centaine de mètres, paraissait possible si l'on équipait le système central, associé à l'anneau, de dispositifs de remise en forme des signaux émanant de chaque station.

Cependant, compte tenu de cette vitesse très élevée de circulation des données sur l'anneau, le système devient très sensible à la notion de "gigue" du signal, c'est-à-dire aux inévitables petites variations de fréquence des impulsions, cette gigue devenant d'autant plus élevée qu'il y a de stations de travail connectées sur l'anneau.

Pour une fréquence d'horloge d'anneau de 16 Mégahertz et en utilisant simplement une remise en forme additionnelle des signaux au niveau de l'anneau, on s'est aperçu qu'il était impossible à l'heure actuelle de connecter sur cet anneau un nombre de stations de travail supérieur à 130 environ, ce qui est très inférieur aux performances actuellement souhaitées pour ce genre d'installation, l'objectif préférentiel étant de pouvoir connecter environ 250 stations de travail sur cet anneau.

L'invention vise à remédier à cet inconvénient. Elle se rapporte à cet effet à un dispositif numérique de connexion d'une pluralité de stations de travail sur un réseau local en anneau où les signaux numériques transmis sont codés selon un procédé déterminé, ledit dispositif comportant un bloc d'interface, dit d'anneau, pour chaque station, chaque bloc étant équipé d'un commutateur de connexion de la station à l'anneau.

Selon une caractéristique de l'invention, le dispositif comporte un oscillateur commandé en tension qui est asservi à l'horloge d'émission du signal numérique de données, provenant d'une des stations du dispositif choisie comme maître, sous la supervision d'une unité logique centrale et qui fournit un signal d'horloge aux blocs d'interface d'anneau.

Chaque bloc d'interface d'anneau comporte:
. un détecteur pour la prise en compte du signal numérique de données provenant de la station;
. un codeur transcodant ce signal de données au rythme de l'horloge d'émission de la station au rythme du signal d'horloge fourni par l'oscillateur du dispositif;
. une mémoire de signal transcodé, placée en sortie d'agencement codeur;
. une logique recevant une indication relative à l'horloge d'émission de la station, via le codeur, un signal de demande d'insertion à l'initiative de la station et une indication de fréquence d'horloge d'anneau de l'unité logique centrale à laquelle elle transmet une information sur la possibilité d'insertion de la station sur l'anneau en fonction des fréquences respectives d'horloge de cette station et de l'anneau;
. un régénérateur de code relié entre la sortie de la mémoire et une entrée du commutateur du bloc, supervisé par la logique pour transmettre sur l'anneau le signal de données recodé sous sa forme initiale, au rythme du signal d'horloge d'anneau, lorsque l'insertion de la station sur l'anneau est assurée par le commutateur sous la commande de la logique;
. un dispositif d'horloge fournissant le signal d'horloge d'anneau à partir du signal d'horloge fourni par l'oscillateur, au profit du régénérateur de code.

Selon une seconde caractéristique de l'invention, dans le cas où les signaux numériques transmis sont codés selon un code, tel un code de type "Manchester différentiel", susceptible d'être traduit à raison de deux bits par symbole transmis, en fonction de l'espacement temporel entre transitions successives du signal, chaque bloc d'interface d'anneau comporte:
. un détecteur, de type détecteur de fronts, pour détecter les changements d'état du signal numérique de données provenant de la station;
. un codeur, de type échantillonneur compteur, recevant le signal d'horloge de l'oscillateur et les indications de changement d'état fournies par le détecteur de fronts, pour coder en un code à deux bits les symboles du signal de données provenant de la station;
. un régénérateur de code apte à restituer le signal de données recodé à partir de la suite des symboles correspondants, temporairement stockés dans la mémoire à raison de deux bits par symbole.

Selon une troisième caractéristique de l'invention, le dispositif d'horloge d'un bloc d'interface d'anneau d'une station comporte une boucle à verrouillage de phase recevant le signal numérique provenant de la station et fournissant un signal d'horloge de fréquence égale au double de la fréquence d'horloge de cette station, pour l'extraction successive des symboles emmagasinés dans la mémoire et pour la restitution à la station, via le commutateur, du signal de données recodé, pour vérification.

Selon une troisième caractéristique de l'invention, la mémoire de symboles comporte des butées de mémoire vide et de mémoire pleine exploitées par l'unité logique centrale pour déterminer celle des stations qui est maître et dont le signal numérique de données est choisi pour piloter l'oscillateur du dispositif.

Selon une cinquième caractéristique de l'invention, le dispositif d'horloge de chaque bloc d'interface d'anneau comporte des organes d'adaptation commandés par la logique et permettant au dispositif de fonctionner à l'une ou l'autre de fréquences d'horloge d'anneau différentes.

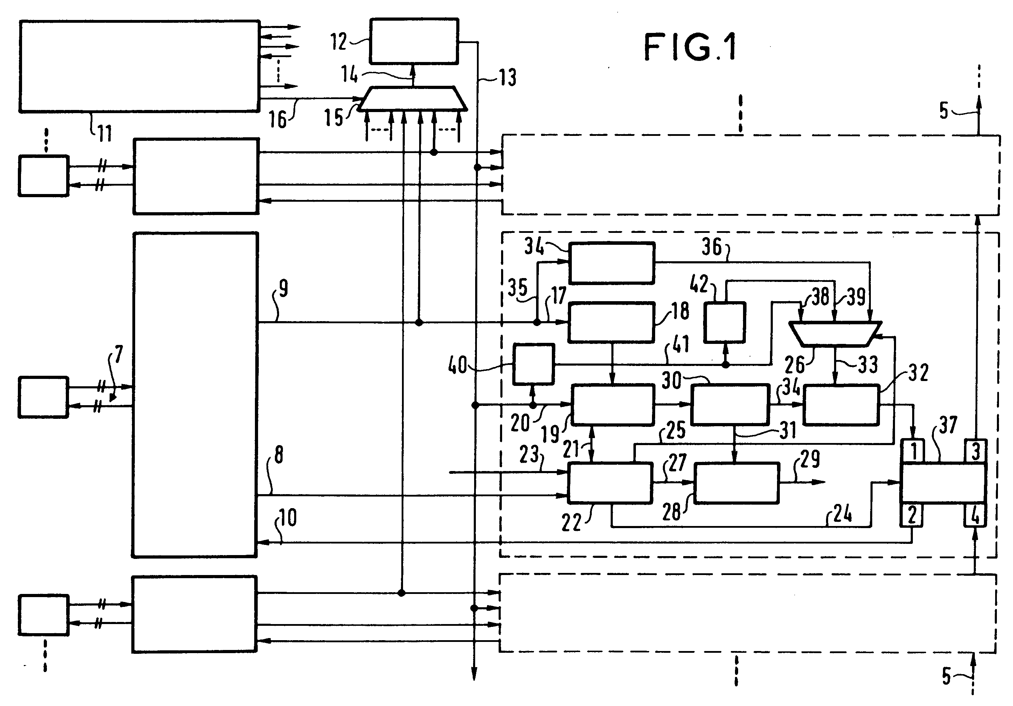

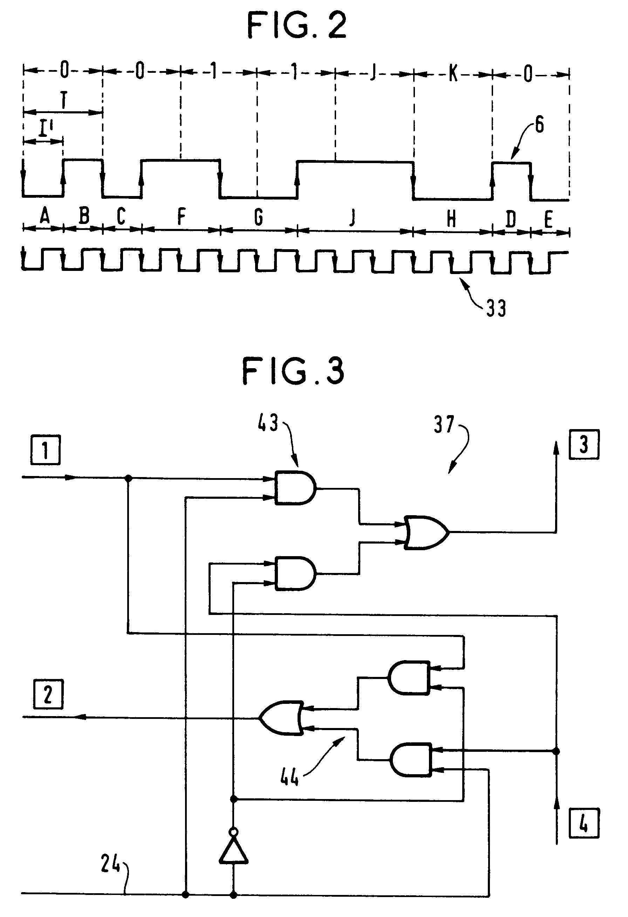

L'invention, ses avantages et caractéristiques ressortiront de la description suivante d'un exemple de réalisation, en référence aux dessins schématiques annexés dans lesquels :
. la figure 1 est un schéma synoptique d'un dispositif de connexion d'une pluralité de stations de travail sur un réseau local en anneau;
. la figure 2 est un diagramme temporel représentatif du code Manchester différentiel;
. la figure 3 est un schéma électrique du commutateur d'insertion d'une station.

La figure 1 présente, partiellement et sous forme synoptique, une installation de connexion d'une pluralité de stations de travail, non représentées, à un réseau local 5 du genre anneau à jeton (LAN Token Ring).

La fréquence d'horloge de données, ou "vitesse d'anneau", des trames de données transmises par l'anneau, est de valeur déterminée caractéristique de l'installation.

Dans le cadre de la réalisation ici envisagée de la présente invention, elle correspond à un débit de données qui peut être soit de 4 Mégabits/seconde, soit de 16 Mégabits/seconde.

D'une manière générale cette installation est supposée prévue pour fonctionner selon la spécification IEEE 802.5.

En particulier, les signaux qui sont émis et reçus par chaque station, ainsi que ceux qui circulent sur l'anneau, sont codés selon le code "Manchester différentiel" dont la structure est rappelée sur la figure 2, selon le signal référencé 6.

Le diagramme temporel 6 représente la suite de bits ou symboles "O O 1 1 J K O", en code Manchester différentiel, La durée de chaque bit est égale à la période T qui est l'inverse de la fréquence correspondant au rythme du signal de données. Cette période T est supposée égale à deux intervalles de base I'.

Dans le code Manchester différentiel, seuls les changements d'état, c'est-à-dire les fronts de montée ou de descente qui sont assortis d'une flèche sur le diagramme 6, sont pris en compte.

Par définition, selon ce code :
. un bit "O" est défini par un changement d'état en début et en milieu de bit, comme on le constate sur le diagramme 6;
. un bit "1" est donné par uniquement un changement d'état en milieu de période T.
. Un symbole "J" est défini par l'absence de changement d'état en cours de période T;
. et un symbole "K" est défini par la présence d'un unique changement d'état en début de période.

Les symboles "O" et "1" sont des bits d'information, tandis que les symboles "J" et "K" sont des violations du code qui servent par exemple à repérer les débuts et les fins de trame de données.

L'examen du signal codé 6 montre que ce signal est finalement composé d'une suite de trois sortes de signaux de longueurs, ou espacements, temporelles différentes :
. des symboles "courts" A, B, C, D, E dont la longueur temporelle est d'un intervalle de base I' (donc la moitié de la période T);
. des symboles "moyens " F, G, H de longueur égale à deux intervalles I';
. et des symboles "longs" J de longueur égale à trois intervalles de base I'.

Il est donc possible de transformer la suite 6 en une suite de signaux longs, moyens, courts qui peuvent chacun être représentés par un nombre binaire, respectivement 11, O1, et 10, qui donne leur longueur et qui ne comporte que deux bits. Cette propriété est utilisée dans la présente installation, comme on le verra ci-après.

En revenant maintenant à la figure 1, les références C(i-1), C(i), C(i+1), etc, désignent les connecteurs qui permettent, via un câble d'une centaine de mètres par exemple, de relier le dispositif d'interface à une des stations de travail, non représentées, considérées comme référencées i-1, i, i+1, etc.

Les signaux transitant par ces connecteurs C sont éventuellement des signaux analogiques.

Toute la description qui va suivre est relative à la station i, mais le synoptique relatif à cette station i se retrouve identiquement, sur ce schéma, pour toutes les autres stations. En d'autres termes, ce qui est affecté, sur ce schéma, des indices (i+1) et (i-1) est identique à ce qui est affecté de l'indice (i) relatif à la station numéro i.

L'installation qui est représentée sur le synoptique est supposé permettant de connecter sur l'anneau du réseau local 5 une station parmi seize stations. Dans la réalité, l'invention offre par exemple une possibilité de connecter une station parmi jusqu'à 250 stations.

L'installation globale comprend alors une pluralité de dispositifs identiques à celui de la figure 1, par exemple quinze dispositifs connectés chacun à seize stations, ces dispositifs étant placés en série autour de l'anneau 5.

Chaque connecteur C est relié, ici par une double liaison bifilaire et bi-directionnelle 7, à un bloc d'interface de station, tel que celui référencé A(A(i) pour la station i. Ce bloc a essentiellement des fonctions d'isolation, de filtrage, de conversions analogique/numérique et vice-versa. Dans une forme de réalisation, lorsqu'une station désire s'insérer sur l'anneau, elle fournit une tension continue qui est appliquée entre les points-milieux des enroulements secondaires de deux transformateurs de sortie de la station. Cette tension est transmise à un détecteur, via la liaison 7 Le bloc d'interface de station fournit en conséquence un signal PHD de demande d'insertion, couramment appelé "signal fantôme" ou "Phantom-Drive", sur une sortie 8.

Le bloc d'interface de station est aussi destiné à transmettre vers l'anneau 5 les données en provenance de la station sur une sortie 9, après codage en code Manchester différentiel (voir le train 6 de la figure 2). Il reçoit de même, sur une entrée 10 les trains de signal numérique de données en provenance de l'anneau 5, via un bloc d'interface de traitement numérique d'anneau, tel celui référencé N°i pour le bloc d'interface de station A(i).

Ce bloc d'interface d'anneau comporte un commutateur électronique 37 de branchement sur l'anneau de la station à laquelle il est associé, ce commutateur sera décrit ultérieurement en liaison avec la figure 3.

A l'ensemble des seize blocs d'interface d'anneau d'un dispositif sont en outre associés:
. une unité logique centrale de commande et de calcul 11 qui est par exemple organisée autour d'un microprocesseur;
. un oscillateur commandé en tension 12 qui fournit un signal d'horloge Hvcxo par une liaison 13 à une entrée d'horloge de chacun des blocs d'interface d'anneau. Ce signal Hvcxo a une fréquence fixe, exempte de gigue, cette fréquence est choisie au moins quatre fois supérieure à la fréquence d'horloge de l'anneau 5; dans le cas de réalisation envisagé, l'horloge fournissant le signal Hvcxo est une horloge dont la fréquence est de soixante quatre Mégahertz.

L'entrée de commande 14 de l'oscillateur 12 reçoit un signal d'asservissement destiné à le caler sur l'horloge de l'anneau 5. Cet asservissement est en fait assuré à partir de l'horloge du signal de données DIN de la station maître.

La station maître, qui est par exemple la station i+1, a entre autres propriétés celles de fonctionner à un rythme d'horloge fixe, égal au rythme de l'anneau 5.

En pratique, comme représenté sur la figure 1, tous les signaux de données DIN des stations du dispositif sont appliqués à un multiplexeur 15 dont les signaux de commande sont fournis par l'unité logique centrale 11, via une liaison 16, cette unité qui connaît la station maître, d'une manière qui sera décrite plus loin.

Le signal numérique DIN de la station maître est porteur du rythme qui est celui de l'anneau, ce signal étant en code Manchester différentiel dont c'est une des propriétés fondamentales. L'horloge fournissant le signal Hvcxo est ainsi asservie sur la fréquence de l'anneau.

Le bloc d'interface d'anneau référencé N°i est décrit maintenant, étant rappelé que la station maître pourrait être une autre station que la station i+1, par exemple la station i-1 ou la station i.

A l'initialisation du dispositif, l'oscillateur 12 n'est pas encore asservi et oscille donc sur une certaine fréquence qui n'est généralement pas celle de l'anneau et la station maître n'a pas encore été reconnue par l'unité logique centrale 11 du dispositif.

Lorsque ce problème a été résolu, d'une manière qui sera évoquée plus loin, l'oscillateur 12 est asservi sur le rythme donné par le signal d'horloge régissant le signal numérique de données DIN de la station maître, c'est-à-dire finalement sur le signal d'horloge de l'anneau. En l'occurrence, comme ci-dessus mentionné, la fréquence de l'oscillateur 12 est de 64 Mégahertz. Elle est quatre fois supérieure à celle de l'anneau pour un fonctionnement de ce dernier à 16 MHz et elle lui est seize fois supérieure pour un fonctionnement de cet anneau à 4 Mhz.

Supposons alors qu'une station, par exemple la station i, désire s'insérer sur l'anneau, ce qui implique la commande du commutateur 37 du bloc d'interface d'anneau correspondant. Ce commutateur est ici un commutateur à quatre bornes référencées 1, 2, 3, 4.

Les signaux qui circulent sur l'anneau 5 vers la station entrent ici par la borne 4 et ceux qui vont de la station vers l'anneau passent par la borne 3.

Les signaux en provenance de la station entrent dans le commutateur 37 par la borne 1, ils sont susceptibles de retourner vers la station par la borne 2 qui est aussi susceptible de transmettre à la station les signaux parvenus de l'anneau par la borne 4.

Initialement lorsque la station n'est pas insérée sur l'anneau, la borne 4 est donc reliée à la borne 3 tandis que la borne 1 est reliés à la borne 2.

Initialement aussi une station i commence par tester sa propre liaison, indépendamment de l'anneau 5, avant d'envoyer un signal de commande d'insertion, tel PHD(i) pour la station i. A cette fin elle envoie un signal de données, ici DIN(i), vers son bloc d'interface d'anneau, via son bloc d'interface de station. Ce signal est composé d'au moins une trame de données de test émise au rythme de l'horloge propre à cette station. Cette trame de test du signal DIN(i) est envoyée sur la liaison 9 par le bloc interface de station A(i), elle transite par le bloc interface d'anneau N°i et est ensuite transmise de la borne 1 à la borne 2 du commutateur 37, puis elle retourne vers la station sous la forme d'un signal ici référencé DOUT(i).

Le signal DIN (i) a par exemple l'allure donnée par le diagramme 6 de la figure 2, il est appliqué sur l'entrée 17 d'un détecteur de fronts ou changements d'état 18 du bloc d'interface d'anneau référencé N°i.

Les fronts du signal DIN(i) détectés par le détecteur 18 sont traités par un codeur 19, de type échantillonneur compteur, qui détermine la durée entre fronts successifs reçus par un comptage effectué au rythme d'horloge fourni par l'oscillateur 12 qui est appliqué sur son entrée de comptage 20.

Le résultat de ce comptage, c'est-à-dire la durée des symboles successifs, est transmis, par une liaison 21, à une logique 22, de type combinatoire, ayant notamment des fonctions d'analyseur de débit de données.

La logique 22 reçoit aussi le signal PHD de demande d'insertion par la liaison 8, ainsi que, par une liaison 23, une information en provenance de l'unité logique centrale 11 qui lui indique la fréquence d'horloge ou "vitesse" de fonctionnement de l'anneau 5.

Cette logique 22 fournit un signal de commande au commutateur 37 par une sortie 24, un signal de sélection par une sortie 25 à un multiplexeur 26 du bloc d'interface d'anneau qui la comporte et un signal d'information à destination de l'unité logique centrale 11 du dispositif par une sortie 2, via un circuit d'alarme 28 et une liaison 29.

La station i considérée peut donc envoyer et récupérer des trames de données de test, à son propre rythme, par l'intermédiaire de la liaison 9 et de la liaison 10 qui unissent le bloc d'interface station A(i) et le bloc d'interface anneau N°i et qui sont alors commutées en série par le commutateur 37 du bloc d'interface d'anneau, ceci permettant notamment de vérifier le bon fonctionnement de ce dernier.

Lors de cette phase initiale, la logique 22 s'assure que la liaison avec l'anneau est possible en vérifiant notamment que le code du signal reçu est approprié soit donc ici du type Manchester différentiel et que le débit de données de la station est compatible avec celui prévu sur l'anneau, une indication relative à la fréquence d'horloge en vigueur sur l'anneau lui étant fournie par l'unité logique centrale 11 à son entrée 23.

Si ce n'est pas le cas, la logique 22 envoie une information indiquant une impossibilité d'insertion de la station sur l'anneau, vers l'unité logique centrale, via le circuit d'alarme 28. Si tout va bien, le codeur 19 code sur deux bits chacun des symboles successifs (court, moyen, long) du signal qu'il reçoit du détecteur de fronts 18 et envoie le résultat de ce codage vers une mémoire 30, de type premier entré-premier sortie, dit "FIFO".

Cette mémoire 30 est équipée de deux butées, l'une d'elle est atteinte lorsque la mémoire est presque vide et l'autre lorsqu'elle est presque pleine. Ces butées sont atteintes, si le rythme de lecture de la mémoire 30 n'est pas compatible avec son rythme d'écriture et cette mémoire fournit alors un signal d'alarme par une sortie 31 vers le vers l'unité logique centrale 11, via le circuit d'alarme 28 et la liaison 29.

Les données transcodées qui correspondent aux symboles su signal et qui sont stockées dans la mémoire 30 sont lues au rythme de la station et restituées dans le code d'origine lorsqu'elles sont renvoyées vers la station qui les a émis, via les bornes 1 et 2 du commutateur 37 et la liaison 10, en phase de test.

Ceci est effectué grâce à un régénérateur de code 32 de type transcodeur comportant notamment un registre à décalage dans lequel les paires de bits provenant de la mémoire 30 sont transférés, à un rythme qui est appliqué à son entrée d'activation 33, via la liaison 34.

Le rythme d'extraction est celui de la station, les trames de données produites par cette station n'étant alors pas transférées sur l'anneau.

Il est prévu une boucle à verrouillage de phase 34, qui reçoit sur son entrée de référence 35 le signal numérique de données DIN - ici DIN(i) -, porteur de rythme, fourni par la station, cette boucle fournit en conséquence un signal d'horloge asservi sur ce rythme et de fréquence égale au double de sa fréquence, sur une liaison de sortie 36.

Dans cette phase initiale de test, la logique 22 applique un signal de sélection au multiplexeur 26, via la liaison 25. Ce signal assure le raccordement temporaire de la liaison 36 avec le régénérateur de code 32 auquel est donc appliqué le signal d'horloge fourni par la boucle 34, ce qui permet de reconstituer la trame envoyée sur la liaison 9, au rythme fixé par la station i.

Comme à ce stade la logique 22 ne reçoit pas de signal d'insertion PHD, elle commande l'interconnexion des bornes 1 et 2 du commutateur 37 sur lequel elle agit via la liaison 24. La trame de test reconstituée est donc retournée à la station i, via la liaison 10, ce qui permet à cette station de vérifier que la liaison vers l'anneau 5 est correcte et peut être utilisée.

La station i envoie un signal d'insertion PHD(i) vers la logique 22 pour son insertion sur l'anneau et cette logique commande le commutateur 37, via la liaison 24.

A noter qu'en variante, le signal d'insertion pourrait aussi bien être envoyé à la fois sur le commutateur 37 et sur la logique 22.

En réponse au signal PHD(i) reçu sur le fil 24, le commutateur 37 interconnecte alors ses bornes 1 et 3, d'une part, et ses bornes 4 et 2, d'autre part, ce qui assure l'insertion de la station sur l'anneau.

La logique 22 connaît la fréquence d'horloge de l'anneau par l'information qui lui est donnée, sur le fil 23, par l'unité logique centrale 11. En l'occurrence, elle sait si cette vitesse est de 4 MHz ou si elle est de 16 MHz. Elle envoie en conséquence un signal de sélection sur la liaison 25 de commande du multiplexeur 25 afin de sélectionner:
. soit une première liaison 38 sur laquelle est appliquée un signal d'horloge de fréquence fixe et égale à 32 MHz, en provenance de l'oscillateur 12, si la fréquence d'horloge de l'anneau est de 16 MHz;
. soit une autre liaison 39 sur laquelle est appliquée un signal d'horloge de fréquence fixe et égale à 8 MHz, en provenance de l'oscillateur 12, si la fréquence d'horloge de l'anneau est de 4 MHz.

Le signal d'horloge à 32 MHz transmis par la liaison 38 est obtenu par division du signal d'horloge Hvcxo fourni par l'oscillateur 12 au moyen d'un diviseur par deux 40.

Le signal d'horloge à 8 MHz transmis par la liaison 39 est obtenu par division du signal apparaissant en sortie 41 du diviseur 40 au moyen d'un diviseur par quatre 42.

Le signal de données DIN(i) qui est fourni par la station i et qui est destiné à être inséré, est alors traité par le bloc d'interface d'anneau N°i de la même façon que l'avait été précédemment la trame de test. Les bits stockés dans la mémoire 30 sont transcodés par le régénérateur de code 32 à un rythme fixé par le signal d'horloge Hvcxo, après extraction.

D'une manière générale, si le signal de données est traité par l'échantillonneur 32 au rythme du signal d'horloge Hvcxo, c'est en revanche le rythme du train de données DIN fourni par la station qui impose le rythme d'écriture dans la mémoire 30, par l'intermédiaire du détecteur de fronts 18. Dans le cas présent, la lecture de la mémoire 30 par le régénérateur de code 32 est effectuée sur un rythme obtenu du signal d'horloge Hvcxo. Par conséquent, pour éviter que la mémoire 30 n'atteigne une de ses deux butées et n'entraîne donc un signal d'alarme sur le fil 31, il est nécessaire que les rythmes d'écriture et de lecture de cette mémoire 30 soient identiques. Ceci est lorsque les système est en fonctionnement normal, car ou bien la station considérée est la station maître et alors elle fonctionne par définition au rythme d'horloge d'anneau ou elle n'est pas maître et elle fonctionne aussi au rythme de l'anneau qui lui est alors donné par l'oscillateur commandé en tension, non représenté, qui régit ses émissions et qui est lui-même asservi au rythme d'horloge de l'anneau, par l'intermédiaire du signal de données "DOUT" reçu par cette station.

Si le rythme de la station considérée n'est pas compatible avec celui de l'anneau, non seulement la mémoire 30 du bloc d'interface d'anneau qui la dessert peut atteindre une butée, mais surtout la logique 22 de ce bloc s'en aperçoit en analysant les comptages effectués par le codeur 19 associé à lui. Un signal d'incompatibilité est alors envoyé vers l'unité logique centrale 11 par la logique 22 de ce bloc d'interface d'anneau, via la liaison 27, le circuit d'alarme 28 et la liaison 29.

La fréquence du signal d'horloge qui est appliqué au régénérateur de codes 32, via la liaison 33, est double de la fréquence du signal régénéré qui sort de ce régénérateur 32.

Ceci se comprend aisément à l'examen de la figure 2 où le signal d'horloge transmis par la liaison 33 est représenté en dessous du signal référencé 6 qui correspond au signal régénéré par le régénérateur 32. La période T figurée est supposée correspondre à celle du signal d'horloge d'anneau.

En supposant que le régénérateur 32 comporte un registre à décalage et que, comme représenté par des flèches descendantes sur le dessin, le signal d'horloge transmis par la liaison 33 décale, sur ses fronts de descente, les bits introduits dans ce registre à décalage, on voit qu'il faut avoir deux fronts de descente pendant une période T. Pour obtenir cela, il est nécessaire que la période du signal d'horloge sur la liaison 33 soit deux fois plus courte que la période T, et donc que sa fréquence soit deux fois plus élevée.

Le schéma détaillé d'un commutateur 37 est donné sur la figure 3. Il est composé comme représenté d'un inverseur logique I et de deux ensembles identiques 43 et 44 à chacun deux portes ET attaquant une porte OU. Les niveaux appliqués sur les entrées 24, 1, et 4 de ce circuit étant des niveaux logiques "O" ou "1", on vérifie aisément sur la figure 3 que ce circuit remplit les fonctions pré définies du commutateur électronique 37.

La synchronisation de l'oscillateur 12 sur la fréquence d'horloge de l'anneau est commandée par l'unité logique centrale 11 qui agit sur le multiplexeur 15 via la liaison 16 pour sélectionner l'une des entrées par lesquelles ce multiplexeur reçoit individuellement les signaux de données DIN émanant respectivement des différentes stations desservies par le dispositif qui le comporte.

Chaque station, hormis la station maître, a son rythme d'horloge fourni par un oscillateur commandé en tension, non représenté, qui lui est propre; cet oscillateur est normalement asservi sur le rythme de l'oscillateur 12.

La station maître n'est pas asservie sur le rythme de l'oscillateur 12 et elle oscille donc à son propre rythme, qui est par définition celui de l'anneau 5.

Initialement aucun signal n'est envoyé par l'unité logique centrale 11 au multiplexeur 15, via la liaison 16, et l'oscillateur 12 oscille en mode libre.

Les stations envoient alors des signaux de données DIN par l'intermédiaire de leurs blocs d'interface de station respectifs vers leurs blocs d'interface d'anneau également respectifs. Toutes les stations se synchronisent alors sur l'horloge fournissant le signal Hvcxo, sauf la station maître qui continue à osciller à son propre rythme.

Les rythmes d'écriture et de lecture de la mémoire 30 du bloc d'interface d'anneau associé à cette station maître ne sont alors pas identiques et cette mémoire se remplit ou se vide jusqu'à atteindre une des deux butées précitées. Un signal d'alarme est alors en conséquence transmis à l'unité logique centrale 11 qui repère ainsi la station maître. L'unité logique centrale commande en conséquence le multiplexeur via la liaison 16 pour sélectionner l'entrée de ce multiplexeur où est reliée la liaison 9 par l'intermédiaire de laquelle est transmis le signal de données DIN de cette station maître.

Le bloc d'interface d'anneau assure donc une remise en forme des signaux et une suppression de la gigue et il permet de s'affranchir des éventuelles erreurs de transmission grâce à l'analyse effectuée par la logique 22 qui permet de vérifier que le signal de données reçu est admissible.

## Revendications

**1)** Dispositif numérique de connexion d'une pluralité de stations de travail sur un réseau local en anneau (5) où les signaux numériques de données sont codés selon un procédé déterminé, ce dispositif comportant un bloc d'interface, dit d'anneau, pour chaque station, chaque bloc étant équipé d'un commutateur (37) de connexion de la station à l'anneau (5), le dispositif étant caractérisé en ce qu'il comporte un oscillateur commandé en tension (12) qui est asservi à l'horloge d'émission du signal numérique de données, provenant d'une des stations du dispositif choisie comme maître, sous la supervision d'une unité logique centrale (11) et qui fournit un signal d'horloge (Hvcxo) aux blocs d'interface d'anneau et en ce que le bloc d'interface d'anneau d'une station comporte:
. un détecteur (18) pour la prise en compte du signal de données (DIN) provenant de la station;
. un codeur (19) transcodant ce signal de données au rythme du signal d'horloge de l'oscillateur du dispositif;
. une mémoire (30) de signal transcodé, en sortie du codeur;
. une logique (22) recevant une indication relative à l'horloge d'émission de la station, via le codeur, un signal (PHD) de demande d'insertion à l'initiative de la station, et une indication (23) de fréquence d'horloge d'anneau de l'unité logique centrale à laquelle elle transmet en retour une information sur la possibilité d'insertion de la station sur l'anneau en fonction des fréquences respectives d'horloge de cette station et de l'anneau;
. un régénérateur de code (32), relié entre la sortie de la mémoire et une entrée du commutateur (37) du bloc, supervisé par la logique pour transmettre sur l'anneau le signal de données recodé sous sa forme initiale, au rythme du signal d'horloge d'anneau, lorsque l'insertion de la station sur l'anneau est assurée par le commutateur sous la commande de la logique;
. un dispositif d'horloge (33, 40, 42) fournissant le signal d'horloge d'anneau à partir du signal d'horloge de l'oscillateur, au profit du régénérateur de code.

**2)** Dispositif numérique de connexion selon la revendication 1, pour réseau où les signaux numériques transmis sont codés selon un code, tel un code de type "Manchester différentiel", susceptible d'être traduit à raison de deux bits par symbole transmis, en fonction de l'espacement temporel entre transitions successives du signal, caractérisé en ce que chaque bloc d'interface d'anneau comporte:
. un détecteur (18), de type détecteur de fronts, pour détecter les changements d'état du signal numérique de données provenant de la station;
. un codeur (19), de type échantillonneur compteur, recevant le signal d'horloge de l'oscillateur et les indications de changement d'état fournies par le détecteur de fronts, pour coder en un code à deux bits les symboles du signal de données provenant de la station;
. un régénérateur de code (32) apte à restituer le signal de données recodé à partir de la suite des symboles correspondants, temporairement stockés dans la mémoire à raison de deux bits par symbole.

**3)** Dispositif selon la revendication 2, caractérisé en ce que le dispositif d'horloge d'un bloc d'interface d'anneau d'une station comporte une boucle à verrouillage de phase (34) recevant le signal de données (DIN) provenant de la station et fournissant un signal d'horloge de fréquence égale au double de la fréquence d'horloge de cette station, pour l'extraction successive des symboles emmagasinés dans la mémoire (30) et pour la restitution à la station, via le commutateur, du signal de données recodé, pour vérification.

**4)** Dispositif selon au moins l'une des revendications 1 à 3, caractérisé en ce que la mémoire (30) d'un bloc d'interface d'anneau comporte des butées de mémoire vide et de mémoire pleine exploitées par l'unité logique centrale (11) pour déterminer celle des stations qui est maître et dont le signal numérique de données (DIN) est choisi pour piloter l'oscillateur (12) du dispositif.

**5)** Dispositif selon l'une des revendications 1 à 4, caractérisé en ce que le dispositif d'horloge de chaque bloc d'interface d'anneau comporte des organes d'adaptation (26, 42) commandés par la logique (22) et permettant au dispositif de fonctionner à l'une ou l'autre de fréquences d'horloge d'anneau différentes.
